# FASCICULE DE BREVET EUROPEEN

(11) **EP 0 543 757 B1**
(45) Date de publication et mention de la délivrance du brevet: **05.03.1997**
(21) Numéro de dépôt: 92470031.3
(22) Date de dépôt: 05.11.1992
(51) Int. Cl.: C22B 5/14, C21B 13/00, F27B 15/00

(54) **Installation de réduction du minerai de fer en lit fluidisé circulant**
Anlage zur Eisenerzreduktion in circulierenden Wirbelschicht
Plant for the reduction of iron ore in circulating fluidised bed

(30) Priorité: 19.11.1991 FR 9114468
(43) Date de publication de la demande: 26.05.1993
(73) Titulaire: SOLLAC, F-92800 Puteaux (FR)
(72) Inventeur: De Lassat, Yann, F-57070 Metz (FR); Delebarre, Arnaud, F-57000 Metz (FR); Riboud, Paul Victor, F-57000 Metz (FR)
(74) Mandataire: Ventavoli, Roger

(56) Documents cités:
- EP-A- 0 046 406
- FR-A- 2 263 305
- FR-A- 2 274 693
- FR-A- 2 294 237
- US-A- 3 276 858

## Description

L'invention concerne le domaine de la réduction du minerai de fer dans des installations fonctionnant avec un lit fluidisé circulant de minerai.

Actuellement, des recherches sont activement conduites afin de mettre au point des procédés sidérurgiques qui pourraient se substituer au haut fourneau. Les inconvénients du haut fourneau que de tels procédés visent à éliminer seraient son manque de souplesse de fonctionnement, et la nécessité de lui associer une cokerie et une installation d'agglomération du minerai de fer. Par ailleurs, il faudrait que les nouveaux procédés conservent les excellentes performances énergétiques du haut fourneau.

Ces nouveaux procédés sont souvent désignés par le terme : procédés de "fusion réduction" ou "smelting reduction". L'un d'entre eux associe deux réacteurs. L'un de ces réacteurs produit à partir de minerai de fer du minerai très fortement réduit à l'état métallique, qui est enfourné dans le deuxième réacteur pour être transformé en fonte liquide. Les circuits gazeux de ces deux réacteurs peuvent être liés l'un à l'autre, ou être totalement indépendants.

Une forme de réalisation particulière d'un tel procédé est décrite par exemple dans l'article "Reduction of fine ore in the circulating fluid bed as the initial stage in smelting reduction (Metallurgical Plant and Technology International, mars 1991, pp 28-32). La réaction de réduction du minerai de fer s'effectue en faisant réagir un lit fluidisé circulant, formé par des particules de minerai en cours de réduction et de semi-coke, avec un gaz réducteur (mélange CO/CO₂/H₂/H₂O) qui assure également la fluidisation. Celle-ci a lieu dans une première partie du réacteur. Les gaz chargés en particules de minerai en cours de réduction et de semi-coke passent ensuite dans un cyclone. Les gaz s'échappent alors du réacteur, tandis que les particules descendent dans un gazéifieur, où sont introduits séparément du charbon et de l'oxygène dans le but de former du CO et de l'hydrogène qui vont contribuer à la réduction du minerai. Les matières solides et les gaz reviennent ensuite dans la première partie du réacteur. Du minerai neuf est introduit dans le courant de matières entre le cyclone et le gazéifieur. Les gaz qui se sont échappés du cyclone sont épurés et réintroduits dans le gazéifieur et à la base de la première partie du réacteur, où ils peuvent rejouer leur rôle de milieu fluidisant et réactionnel.

Dans le type d'appareil qui vient d'être décrit, l'injection d'oxygène pur dans le gazéifieur peut être à l'origine de problèmes opératoires. Cette injection crée des zones à haute température riches en oxygène dans lesquelles le minerai de fer déjà partiellement ou totalement réduit en fer métallique peut fondre partiellement, s'agglomérer et se réoxyder. Il y a ainsi un risque de formation de blocs oxydés qui seront difficiles à réduire à nouveau, et surtout à entraîner et à évacuer. Le minerai fondu et réoxydé peut également se déposer sur les parois du gazéifieur et l'encrasser considérablement. Ces risques sont d'autant plus élevés que la concentration en fer du lit fluidisé est plus importante.

Le but de l'invention est de supprimer ces points chauds et oxydants dans le circuit parcouru par le minerai en cours de réduction, pour éviter la réoxydation et la fusion des particules de minerai de fer déjà réduit.

A cet effet, l'invention a pour objet une installation de réduction du minerai de fer, du type comprenant un premier réacteur contenant un lit de minerai de fer en cours de réduction, pourvu de moyens pour fluidiser et mettre en circulation ledit minerai comportant un dispositif d'injection de gaz réducteur contenant du CO et de l'hydrogène à la base dudit premier réacteur, des moyens pour extraire dudit premier réacteur ledit minerai en cours de réduction, un cyclone assurant la séparation entre les gaz réducteurs contenant du CO et de l'hydrogène issus dudit premier réacteur et ledit minerai en cours de réduction qu'ils contiennent et l'évacuation desdits gaz réducteurs, caractérisée en ce qu'elle comprend également, en aval dudit cyclone sur le parcours dudit minerai en cours de réduction, une zone de fluidisation pourvue de moyens d'introduction de gaz réducteurs de manière à mettre en mouvement ledit minerai en cours de réduction, et une conduite amenant lesdits gaz et ledit minerai à l'intérieur dudit premier réacteur, en ce qu'elle comprend également un réacteur de gazéification pourvu de moyens d'injection de matières carbonées et d'oxygène produisant un gaz réducteur contenant du CO et de l'hydrogène, et des moyens d'introduction dudit gaz dans ledit premier réacteur, ledit réacteur de gazéification ne se trouvant pas sur le parcours des minerais en cours de réduction, et en ce qu'elle comprend également des moyens de mélange de minerai de fer neuf audit minerai en cours de réduction.

Comme on l'aura compris, l'invention consiste à isoler le lieu de production du CO et de l'hydrogène du circuit de circulation du minerai en cours de réduction, dans lequel se trouvent des particules de fer.

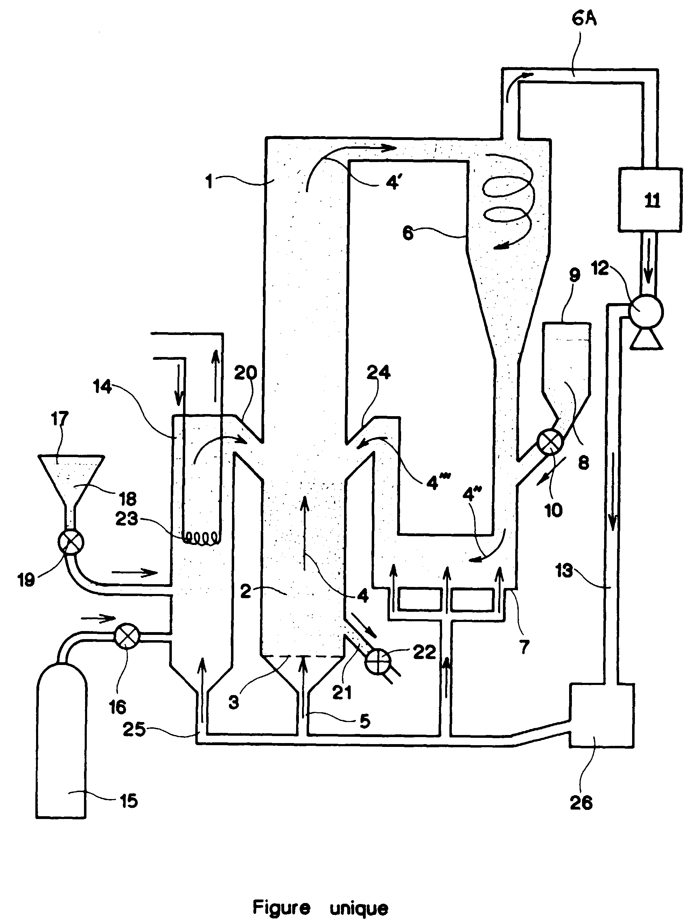

L'invention sera mieux comprise à la lecture de la description qui suit, faisant référence à la figure unique annexée schématisant l'installation selon l'invention.

La figure unique montre une installation de réduction du minerai de fer selon l'invention, composée essentiellement de quatre parties : un premier réacteur, un cyclone, une zone de fluidisation et un réacteur de gazéification. Un premier réacteur 1 renferme à sa base un lit 2 de matières solides relativement dense, contenant essentiellement du minerai de fer se trouvant pour sa plus grande partie à l'état réduit, mélangé à du semi-coke. Ce lit 2 est retenu par un support 3 perméable aux gaz. Il est traversé par un courant gazeux de fluidisation qui met en circulation à travers l'installation, comme indiqué par les flèches 4, 4', 4", 4‴, les matières solides qui y ont été introduites. Les gaz assurant la fluidisation sont composés essentiellement de CO, de CO₂, d'hydrogène et de vapeur d'eau, le CO et l'hydrogène assurant la réduction du minerai de fer, et le CO₂ et la vapeur d'eau résultant de cette réduction. Ces gaz sont en proportions variables dans l'ensemble de l'installation. Ils sont insufflés à la base du réacteur 1 par une conduite 5. Au cours de leur cheminement dans l'installation, et notamment dans le réacteur 1, les particules de minerai de fer initialement à l'état naturel subissent une réduction partielle en fer métallique. Les gaz et les matières solides qu'ils transportent pénètrent ensuite dans un cyclone 6, dans lequel ils sont séparés. Les gaz sont évacués du cyclone par une conduite 6A, alors que les matières solides retombent dans la partie inférieure du cyclone 6. Elles pénètrent ensuite dans une zone de fluidisation 7, après avoir été mélangées à du minerai de fer neuf 8 contenu dans une trémie 9, et dont l'admission dans l'installation est commandée par une vanne 10. Parallèlement à cela, après leur sortie du cyclone 6 les gaz passent par un réacteur de décarbonatation 11 d'un type connu en soi où ils sont épurés du CO₂ et de la vapeur d'eau qu'ils contiennent. Puis ils sont envoyés, par des moyens appropriés symbolisés par la pompe 12 et la conduite 13, et après être passés par un préchauffeur 26, dans la zone de fluidisation 7 et à la base du premier réacteur 1 pour y assurer à nouveau leur rôle de fluidisation et de réduction du minerai de fer. Les gaz et les matières solides fluidisées qui ont transité dans la zone de fluidisation 7 sont enfin ramenés dans le premier réacteur 1 par une conduite 24.

L'installation comporte également un réacteur de gazéification 14, dont le rôle est de régénérer le CO et l'hydrogène servant à la réduction du minerai et de fournir l'énergie nécessaire à l'équilibre du bilan thermique. Dans les installations selon l'Art Antérieur, ce réacteur de gazéification est inséré à la place de la zone de fluidisation 7 de l'installation selon l'invention, ce qui pose les problèmes signalés plus haut à cause du passage de minerai déjà réduit dans ce réacteur. Selon l'invention, le réacteur de gazéification 14 est situé hors du circuit de circulation des solides, de manièrer à ce que les particules de fer déjà réduites ne pénètrent pas dans les zones oxydantes qui peuvent se trouver dans ce réacteur 14. Celui-ci comporte un réservoir d'oxygène 15 et une vanne 16 commandant l'admission de l'oxygène dans le réacteur 14, et une trémie 17 contenant des matières carbonées 18, telles que du charbon, dont l'admission dans le réacteur 14 est commandée par une vanne 19. Préférentiellement, une partie des gaz de fluidisation provenant de la conduite 13 est introduite par une conduite 25 à la base du réacteur de gazéification 14. Le CO nouvellement formé et les gaz de fluidisation passent enfin dans une conduite 20 qui les amène dans le premier réacteur 1, où ils peuvent jouer leur rôle dans la réduction et la fluidisation du minerai. Préférentiellement, le charbon 18 est introduit en excès dans le réacteur de gazéification, ce qui entraîne la présence de semi-coke dans les matières circulant dans l'installation et permet ainsi d'améliorer le comportement du minerai de fer.

La partie de l'installation où circulent les matières solides constitue en théorie un réacteur parfaitement brassé, dans lequel, en régime permanent, la composition chimique des matières transportées est la même à tout moment et en tout point du réacteur. Par suite de la densité du fer métallique, qui est plus forte que celle du minerai, et de sa capacité à s'agglomérer par fusion partielle aux autres particules, la proportion de fer métallique dans la zone basse du premier réacteur est plutôt plus importante que dans les autres parties de l'installation. C'est ici qu'a lieu par une conduite d'évacuation 21 munie d'une vanne 22, l'extraction périodique ou continue des matières solides de l'installation. Ces matières, composées de minerai de fer réduit à plus de 75 % et de semi-coke sont alors prêtes à être introduites dans un réacteur de fusion où sera produite la fonte.

Pour que la réaction de réduction du minerai de fer ait lieu dans de bonnes conditions, il faut que la température des gaz soit de l'ordre de 900-950°C. Pour ne pas obtenir une température trop élevée, il peut être nécessaire d'extraire de la chaleur des gaz produits par le réacteur de gazéification 14. Cela peut être fait par divers moyens tels que :
- la fabrication de vapeur d'eau, utile dans d'autres installations de l'usine, par un échangeur 23 installé à l'intérieur du réacteur de gazéification 14 ;
- le préchauffage des gaz réducteurs de fluidisation ;
- la décomposition des fondants utilisés dans l'étage de fusion ; etc...

Toujours pour abaisser la température des gaz du réacteur de gazéification 14, on peut également choisir de placer l'introduction de minerai de fer neuf 8 dans ce réacteur 14, de manière à assurer une préréduction du minerai avant son insertion dans le circuit de circulation des matières solides.

Bien entendu, sans sortir de l'esprit de l'invention, des modifications peuvent être apportées à l'installation telle qu'elle vient d'être décrite. En particulier, l'apport de gaz contenant du CO et de l'hydrogène à la base du premier réacteur 1 et du réacteur de gazéification 14 et dans la zone de fluidisation 7 peut avoir d'autres origines que les gaz s'échappant du cyclone 6. Ils peuvent, par exemple provenir d'un réacteur assurant la fusion et la réduction complète du minerai réduit, et sa transformation en fonte. De même l'introduction des gaz générés dans le réacteur de gazéification 14 sur le parcours du minerai en cours de réduction peut être réalisée en un point quelconque de ce parcours, et non uniquement au niveau du réacteur 1.

## Revendications

1. Installation de réduction du minerai de fer, du type comprenant un premier réacteur (1) contenant un lit de minerai de fer en cours de réduction, pourvu de moyens pour fluidiser et mettre en circulation ledit minerai comportant un dispositif d'injection de gaz réducteurs contenant du CO et de l'hydrogène à la base dudit premier réacteur et des moyens pour extraire dudit premier réacteur (1) ledit minerai en cours de réduction, un cyclone (6) assurant la séparation entre les gaz réducteurs contenant du CO et de l'hydrogène issus dudit premier réacteur (1) et ledit minerai en cours de réduction qu'ils contiennent et l'évacuation desdits gaz réducteurs, caractérisée en ce qu'elle comprend également, en aval dudit cyclone (6) sur le parcours dudit minerai en cours de réduction, une zone de fluidisation (7) pourvue de moyens d'introduction de gaz réducteurs de manière à mettre en mouvement ledit minerai en cours de réduction, et une conduite (24) amenant lesdits gaz et ledit minerai à l'intérieur dudit premier réacteur, en ce qu'elle comprend également un réacteur de gazéification (14) pourvu de moyens (15, 16, 17, 19) d'injection de matières carbonées (18) et d'oxygène produisant un gaz réducteur contenant du CO et de l'hydrogène, ledit réacteur de gazéification (14) ne se trouvant pas sur le parcours des minerais en cours de réduction et étant pourvu de moyens (20) d'introduction dudit gaz réducteur sur ledit parcours, et en ce qu'elle comprend également des moyens (9, 10) de mélange de minerai de fer neuf audit minerai en cours de réduction.

2. Installation selon la revendication 1, caractérisée en ce que lesdits moyens (20) d'introduction dudit gaz réducteur sur ledit parcours des minerais débouchent dans ledit premier réacteur (1).

3. Installation selon la revendication 1 ou 2, caractérisée en ce qu'elle comporte un réacteur de décarbonatation (11) pour enlever le CO₂ et la vapeur d'eau des gaz réducteurs sortant dudit cyclone (6).

4. Installation selon la revendication 3, caractérisée en ce qu'elle comporte des moyens (12, 13) pour envoyer les gaz réducteurs sortant dudit cyclone (6) dans ledit premier réacteur (1) et ladite zone de fluidisation (7).

5. Installation selon la revendication 3 ou 4, caractérisée en ce qu'elle comporte des moyens (25) pour envoyer les gaz réducteurs sortant dudit cyclone (6) dans ledit réacteur de gazéification (14).

6. Installation selon l'une quelconque des revendications 1 à 5, caractérisée en ce qu'elle comporte des moyens (23) d'extraction de la chaleur du gaz réducteur produit par le réacteur de gazéification (14).

7. Installation selon l'une des revendications 1 à 6, caractérisée en ce que les moyens (9, 10) de mélange de minerai de fer neuf (8) au minerai en cours de réduction sont insérés entre le cyclone (6) et la zone de fluidisation (7).

## Patentansprüche

1. Anlage zur Reduktion von Eisenerz, mit einem ersten Reaktor (1), der ein Eisenerzbett während der Reduktion aufweist, das mit einer Anordnung zur Wirbelschichtausgestaltung und zur Zirkulation des Erzes versehen ist, einschließlich einer Vorrichtung zur Zufuhr von Reduktionsgasen, die CO und Wasserstoff enthalten, zur Basis des ersten Reaktors, sowie einer Anordnung, um vom ersten Reaktor 1 das Erz während der Reduktion zu entnehmen, wobei ein Zyclon (6) die Trennung der das CO und den Wasserstoff enthaltenden, aus dem ersten Reaktor austretenden Reduktionsgase von den sie enthaltenden Erzen während der Reduktion sowie die Abfuhr dieser Reduktionsgase bewirkt, dadurch gekennzeichnet, daß sie außerdem nach dem Zyclon (6) im Weg des Erzes während der Reduktion eine Wirbelschichtzone (7) aufweist, die mit einer Anordnung zur Zufuhr von Reduktionsgasen versehen ist, so daß das Erz während seiner Reduktion bewegt wird, sowie eine Leitung (24) aufweist, die die Gase und das Erz dem Inneren des Reaktors zuführt, daß sie einen Vergasungsreaktor (14) aufweist, der mit einer Anordnung (15, 16, 17, 19) versehen ist zur Zufuhr von kohlenstoffhaltigen Stoffen (18) und von Sauerstoff zur Erzeugung eines CO und Wasserstoff enthaltenden Reduktionsgases, wobei der Vergasungsreaktor (14) sich nicht im Weg der Erze während der Reduktion befindet und mit einer Anordnung (20) versehen ist zur Zufuhr des Reduktionsgases in diesen Weg und daß sie eine Anordnung (9, 10) aufweist zur Zumischung frischen Eisenerzes zum Erz während der Reduktion.

2. Anlage nach Anspruch 1, dadurch gekennzeichnet, daß die Anordnung (20) zur Zufuhr von Reduktionsgas in den Weg des Erzes im ersten Reaktor (1) mündet.

3. Anlage nach Ansprüchen 1 oder 2, dadurch gekennzeichnet, daß sie einen Entkarbonisierungsreaktor (11) aufweist zur Entfernung von CO₂ und von Wasserdampf aus den aus dem Zyclon (6) austretenden Reduktionsgasen.

4. Anlage nach Anspruch 3, dadurch gekennzeichnet, daß sie eine Anordnung (12, 13) aufweist, um die aus dem Zyclon (6) austretenden Reduktionsgase in den ersten Reaktor (1) und in die Wirbelschichtzone (7) einzuführen.

5. Anlage nach Ansprüchen 3 oder 4, dadurch gekennzeichnet, daß sie eine Anordnung (25) aufweist, um die aus dem Zyclon (6) austretenden Reduktionsgase in den Vergasungsreaktor (14) einzuleiten.

6. Anlage nach einem der Ansprüche 1 bis 5, dadurch gekennzeichnet, daß sie eine Anordnung (23) aufweist zur Abfuhr von Wärme aus den vom Vergasungsreaktor (14) erzeugten Reduktionsgasen.

7. Anlage nach einem der Ansprüche 1 bis 6, dadurch gekennzeichnet, daß die Anordnung (9,10) zur Zumischung von frischem Eisenerz (8) zum Erz während der Reduktion zwischen dem Zyclon (6) und der Wirbelschichtzone (7) eingeschoben ist.

## Claims

1. Plant for the reduction of iron ore, of the type including a first reactor (1) containing a bed of iron ore being reduced, provided with means for fluidizing and for circulating the said ore, comprising a device for injecting reducing gases containing CO and hydrogen into the base of the said first reactor and means for extracting from the said first reactor (1) the said ore being reduced, a cyclone (6) separating the reducing gases containing CO and hydrogen coming from the said first reactor (1) from the said ore being reduced which they contain and evacuating the said reducing gases, characterized in that it also includes, downstream of the said cyclone (6) in the path of the said ore being reduced, a fluidization zone (7) provided with means for introducing reducing gases so as to set in movement the said ore being reduced, and a pipe (24) bringing the said gases and the said ore into the first reactor, in that it also includes a gasification reactor (14) provided with means (15, 16, 17, 19) for injecting carbonaceous materials (18) and oxygen, producing a reducing gas containing CO and hydrogen, which gasification reactor (14) does not lie in the path of the ores being reduced and is provided with means (20) for introducing the said reducing gas into the said path, and in that it also includes means (9, 10) for mixing fresh iron ore with the said ore being reduced.

2. Plant according to Claim 1, characterized in that the said means (20) for introducing the said reducing gas into the said path of the ores open into the said first reactor (1).

3. Plant according to Claim 1 or 2, characterized in that it comprises a decarbonizing reactor (11) for removing CO₂ and water vapour from the reducing gases leaving the said cyclone (6).

4. Plant according to Claim 3, characterized in that it comprises means (12, 13) for sending the reducing gases leaving the said cyclone (6) into the said first reactor (1) and the said fluidization zone (7).

5. Plant according to Claim 3 or 4, characterized in that it comprises means (25) for sending the reducing gases leaving the said cyclone (6) into the said gasification reactor (14).

6. Plant according to any one of Claims 1 to 5, characterized in that it comprises means (23) for extracting the heat from the reducing gas produced by the gasification reactor (14).

7. Plant according to one of Claims 1 to 6, characterized in that the means (9, 10) for mixing fresh iron ore (8) with the ore being reduced are inserted between the cyclone (6) and the fluidization zone (7).
